# EUROPEAN PATENT APPLICATION

(11) **EP 4 756 263 A1**
(43) Date of publication of application: **10.06.2026**
(21) Application number: 24848180.6
(22) Date of filing: 26.07.2024
(51) Int. Cl.: F16J 15/16

(54) **DUST COVER ASSEMBLY, STEERING INTERMEDIATE SHAFT SEALING STRUCTURE AND VEHICLE**

(30) Priority: 31.07.2023 CN 202310957782
(71) Applicant: BYD Company Limited, Shenzhen, Guangdong 518118 (CN)
(72) Inventor: ZHANG, Peng, Shenzhen, Guangdong 518118 (CN); DING, Jintang, Shenzhen, Guangdong 518118 (CN)
(74) Representative: Mathys & Squire
(86) International application number: PCT/CN2024/107846
(87) International publication number: WO 2025/026223

(57) **Abstract**

This application discloses a vehicle, and the vehicle has a dust cover assembly and a steering intermediate shaft sealing structure. The dust cover assembly includes: a cover body, where one end of the cover body is adapted to be connected to a front cowl panel of the vehicle, and the other end of the cover body is provided with a mounting hole; a sealing member; and a bushing, where the bushing is disposed between a hole wall of the mounting hole and the sealing member, and the sealing member is adapted to be sealingly connected to a steering intermediate shaft of the vehicle.

## Description

This application claims priority to Chinese Patent Application No. 202310957782.7, filed on July 31, 2023 and entitled "DUST COVER ASSEMBLY, STEERING INTERMEDIATE SHAFT SEALING STRUCTURE AND VEHICLE", which is incorporated herein by reference in its entirety.

### TECHNICAL FIELD

This application pertains to the field of steering shaft sealing technologies, and relates to a dust cover assembly, a steering intermediate shaft sealing structure and a vehicle.

### BACKGROUND

In the related art, a dust cover sealing structure for a steering intermediate shaft is disclosed, including a steering intermediate shaft, a front wall panel assembly and a dust cover assembly. The steering intermediate shaft extends out through the front wall panel assembly, and the dust cover assembly is sleeved on the steering intermediate shaft. The dust cover assembly includes a dust cover and a sealing member, one end of the dust cover is fastened to the front wall panel assembly, and the other end of the dust cover is connected to the steering intermediate shaft. A sealing assembly is disposed in the dust cover and is sealingly connected to the steering intermediate shaft.

In the dust cover sealing structure for the steering intermediate shaft in the related art, support strength of a sealing lip of the sealing member is insufficient, and when a radial error is large, a gap is formed between the sealing lip and the steering intermediate shaft, resulting in reduced sealing performance or even sealing failure.

### SUMMARY

A technical problem to be resolved in this application is that, in a dust cover sealing structure for a steering intermediate shaft in the related art, support strength of the sealing lip is insufficient, and when the radial error is large, a gap is formed between the sealing lip and the steering intermediate shaft, resulting in reduced sealing performance or even sealing failure. Therefore, a dust cover assembly, a steering intermediate shaft sealing structure and a vehicle are provided.

To solve the foregoing technical problem, in one aspect, this application provides a dust cover assembly, including:
a cover body, one end of the cover body being adapted to be connected to a front cowl panel of a vehicle, and another end of the cover body being provided with a mounting hole;
a sealing member; and
a bushing, the bushing being disposed between a hole wall of the mounting hole and the sealing member, and the sealing member being adapted to be sealingly connected to a steering intermediate shaft of the vehicle.

Optionally, a plurality of outer ribs are disposed on an outer circumferential surface of the bushing, and the plurality of outer ribs extend along an axial direction of the bushing;
and/or,
a plurality of inner ribs are disposed on an inner wall surface of the bushing, and the plurality of inner ribs extend along the axial direction of the bushing.

Optionally, the outer ribs and the inner ribs are disposed on the bushing, the plurality of outer ribs being disposed with equal spacing, the plurality of inner ribs being disposed with equal spacing, and a spacing between adjacent outer ribs being greater than a spacing between adjacent inner ribs.

Optionally, an annular mounting groove is formed in the hole wall of the mounting hole, and the bushing and the sealing member are disposed in the mounting groove.

Optionally, a first boss and a second boss are disposed on the hole wall of the mounting hole to form the mounting groove.

Optionally, an end surface of the bushing that is away from the second boss in the axial direction of the bushing abuts against a surface of the first boss that faces the second boss. An end surface of the bushing that is close to the second boss in the axial direction of the bushing abuts against a surface of the second boss that faces the first boss.

Optionally, the bushing includes a bushing body and a flange connected to the bushing body, and the flange protrudes radially inward from the first boss and the second boss.

Optionally, the sealing member includes an annular main body portion and a sealing lip. The sealing lip is connected to an inner wall surface of the annular main body portion.

The annular main body portion is sealingly connected to the inner wall surface of the bushing, and the sealing lip is adapted to be in sealing contact with the steering intermediate shaft.

Optionally, the sealing member further includes a second support ring. A groove for mounting the second support ring is formed in the annular main body portion or the sealing lip, and the second support ring is configured to provide support strength for the sealing lip.

Optionally, the sealing member further includes a first support ring.

An axial boss extending along an axial direction is disposed on the first support ring, an end surface in an axial direction of the sealing lip is provided with a first groove recessed along the axial direction of the sealing lip, and the axial boss is interference-fitted in the first groove; and/or, a radial boss extending along a radial direction of the first support ring is disposed on the first support ring, an inner wall surface of an axial end opening of the annular main body portion is provided with a second groove recessed along a radial direction of the annular main body portion, and the radial boss is interference-fitted in the second groove.

Optionally, a first lip and a second lip are formed on a radially inner side of the sealing lip. The first lip and the second lip are located at two opposite ends in an axial direction of the sealing lip. The first lip and the second lip are adapted to be in sealing contact with the steering intermediate shaft.

Optionally, a shaft seal inter-lip groove is formed at a position between the first lip and the second lip in an inner wall surface of the sealing lip in the axial direction, and the shaft seal inter-lip groove is recessed radially outward of the sealing member.

Optionally, the sealing member further includes a first support ring and a second support ring.

An end surface in the axial direction of the sealing lip is provided with a first groove recessed along the axial direction of the sealing lip, the first groove is located in a radially outer side of the first lip, an axial boss is disposed on the first support ring, and the axial boss is interference-fitted in the first groove to support the first lip;
and/or,
a support ring mounting groove recessed radially is formed in a surface of the sealing lip that is away from the second lip, the second support ring is sleeved on the sealing lip and accommodated in the support ring mounting groove, and the second support ring is configured to press the second lip tightly against the steering intermediate shaft.

Optionally, the bushing is an integrally formed structure.

According to the dust cover assembly in this embodiment of this application, the bushing is disposed between the hole wall of the mounting hole of the cover body and the sealing member, and the sealing member is adapted to be sealingly connected to the steering intermediate shaft of the vehicle. In comparison with the related art, the sealing member and the bushing are sealed, with no gap. In this way, the sealing member and the cover body are fastened and sealed relative to each other, and the bushing can support well the sealing member, to improve support strength for the sealing member, so that the sealing member is in a closer contact with the steering intermediate shaft, and a radial assembly error of the sealing member is reduced. This improves sealing effect of the dust cover assembly, and reduces a probability of sealing failure of the dust cover assembly.

When the vehicle is in a high-water-level immersion or floating water condition, water cannot enter a cockpit through the dust cover assembly, which meets an IPX7 waterproof rating requirement, and meets requirements of off-road vehicles for high-water-level immersion wading and floating water condition, thereby improving wading safety of the vehicle.

In another aspect, an embodiment of this application further provides a steering intermediate shaft sealing structure, including a front cowl panel, a steering intermediate shaft, and the foregoing dust cover assembly. A through hole for the cover body to pass through is provided in the front cowl panel, one end of the cover body is sealingly connected to the front cowl panel, the steering intermediate shaft passes through the cover body, and the sealing member is sealingly connected to the steering intermediate shaft.

Optionally, a dust cover pressing plate is further included. The cover body includes an outer cylinder body and an inner cylinder body. A cavity is formed inside the outer cylinder body, and one end of the outer cylinder body is sealingly connected to the front cowl panel. The inner cylinder body is connected to another end of the outer cylinder body and extends from an end surface of another end of the outer cylinder body to the front cowl panel. The dust cover pressing plate is configured to press the end of the outer cylinder body onto the front cowl panel. The bushing is press-fitted in the inner cylinder body, and the sealing member is press-fitted in the bushing.

Optionally, the cover body further includes a body sealing portion. The body sealing portion is connected to the end of the outer cylinder body, and the dust cover pressing plate is configured to press the body sealing portion onto the front cowl panel.

In another aspect, an embodiment of this application further provides a vehicle, including the foregoing dust cover assembly or the foregoing steering intermediate shaft sealing structure.

### BRIEF DESCRIPTION OF DRAWINGS

FIG. 1 is a schematic diagram of a steering intermediate shaft sealing structure according to an embodiment of this application;
FIG. 2 is a cross-sectional view of a dust cover assembly and a steering intermediate shaft according to an embodiment of this application;
FIG. 3 is a cross-sectional view of a dust cover assembly according to an embodiment of this application;
FIG. 4 is a cross-sectional view of a cover body of a dust cover assembly and a dust cover pressing plate according to an embodiment of this application;
FIG. 5 is a schematic diagram of a bushing of a dust cover assembly according to an embodiment of this application;
FIG. 6 is a cross-sectional view of a sealing member of a dust cover assembly according to an embodiment of this application;
FIG. 7 is a cross-sectional view of a first support ring of a sealing member of a dust cover assembly according to an embodiment of this application; and
FIG. 8 is a cross-sectional view of shaft seal of a sealing member of a dust cover assembly according to an embodiment of this application.

Reference numerals in the specification are as follows:
1: front cowl panel; 2: dust cover assembly; 21: dust cover pressing plate; 22: cover body; 22a: outer cylinder body; 22b: inner cylinder body; 221: first boss; 222: mounting groove; 223: second boss; 224: body sealing portion; 225: cavity; 23: bushing; 23a: bushing body; 23b: flange; 231: outer circumferential surface of the bushing body 232: outer rib; 233: opposite axial end surface of the bushing; 234: axial end surface of the bushing 235: flange bottom surface; 236: inner wall surface of the bushing body; 237: inner rib; 238: flange inner side surface; 24: sealing member; 241: first support ring; 2411: support ring outer side surface; 2412: radial boss; 2413: support ring bottom surface; 2414: axial boss; 2415: support ring inner side surface; 2416: support ring top surface; 242: annular main body portion; 2421: body portion; 24211: second groove; 24212: support ring mounting side surface; 24213: support ring mounting bottom surface; 24214: first groove; 24215: first lip; 24216: shaft seal inter-lip groove; 24217: second lip; 24218: support ring mounting groove; 24219: shaft seal top end surface; 24220: shaft seal outer side surface; 2422: sealing lip; 24221: shaft seal bottom end surface; 2423: holder; 243: second support ring; 244: deformation avoidance space; 3: steering intermediate shaft.

### DESCRIPTION OF EMBODIMENTS

To make technical problems to be resolved, technical solutions, and beneficial effects of this application clearer, the following further describes this application in detail with reference to the accompanying drawings and embodiments. It should be understood that the specific embodiments described herein are merely used to explain this application, but are not intended to limit this application.

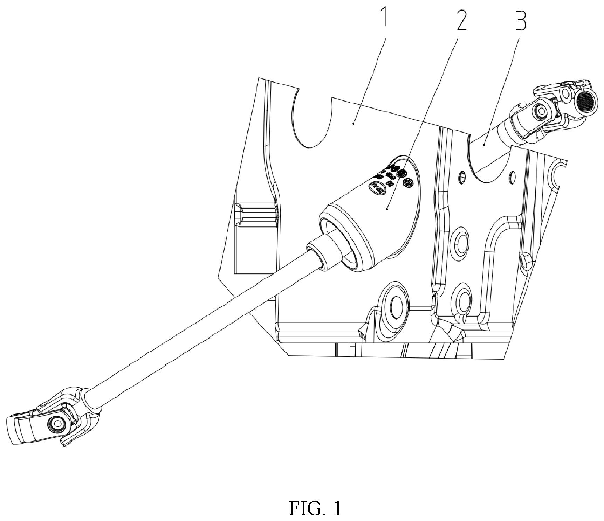

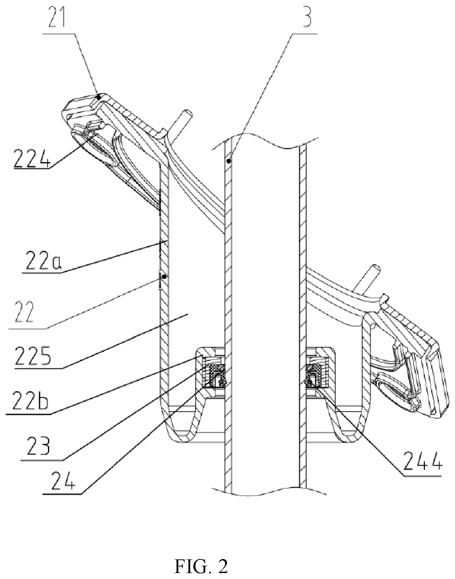

Referring to FIG. 1 to FIG. 8, a dust cover assembly 2 provided in an embodiment of this application includes a cover body 22, a bushing 23, and a sealing member 24. One end of the cover body 22 is adapted to be connected to a front cowl panel 1 of a vehicle, and another end of the cover body 22 is provided with a mounting hole. The bushing 23 is disposed between a hole wall of the mounting hole and the sealing member 24, and the sealing member 24 is adapted to be sealingly connected to a steering intermediate shaft 3 of the vehicle. Both one end and another end of the cover body 22 are free ends.

In the dust cover assembly 2 in this embodiment of this application, the bushing 23 is disposed between the hole wall of the mounting hole of the cover body 22 and the sealing member 24, and the sealing member 24 is sealingly connected to the bushing 23. In comparison with the related art, the bushing 23 and the cover body 22 are sealed, with no gap. In this way, the sealing member 24 and the cover body 22 are fastened and sealed relative to each other, and the bushing 23 can support well the sealing member 24, to improve support strength for the sealing member 24, so that the sealing member 24 is in a closer contact with the steering intermediate shaft 3, and a radial assembly error of the sealing member 24 is reduced. This improves sealing effect of the dust cover assembly 2, and reduces a probability of sealing failure of the dust cover assembly 2. When the vehicle is in a high-water-level immersion or floating water condition, water cannot enter a cockpit through the dust cover assembly 2, which meets an IPX7 waterproof rating requirement, and meets requirements of an off-road vehicle for high-water-level immersion wading and floating water condition, thereby improving wading safety of the vehicle.

In addition, the dust cover assembly 2 in this embodiment of this application can further prevent a solid contaminant such as outside dust or other liquid contaminants from entering the cover body 22 and the cockpit.

In an embodiment, a dust cover pressing plate 21 is further included. The cover body 22 includes an outer cylinder body 22a and an inner cylinder body 22b. A cavity 225 is formed inside the outer cylinder body 22a, and one end of the outer cylinder body 22a is sealingly connected to the front cowl panel 1. The inner cylinder body 22b is connected to another end of the outer cylinder body 22a and extends from an end surface of another end of the outer cylinder body 22a toward the front cowl panel 1. The dust cover pressing plate 21 is configured to press the end of the outer cylinder body 22a onto the front cowl panel 1. The bushing 23 is press-fitted in the inner cylinder body 22b, and the sealing member 24 is press-fitted in the bushing 23.

In an embodiment, the cover body 22 further includes a body sealing portion 224. The body sealing portion 224 is connected to the end of the outer cylinder body 22a, and the dust cover pressing plate 21 is configured to press the body sealing portion 224 onto the front cowl panel 1.

In an embodiment, the cover body 22 is integrally formed by vulcanization. In comparison with a solution in which the cover body 22 and a collar are fastened to each other by adhesive, the process is simpler and sealing reliability is better.

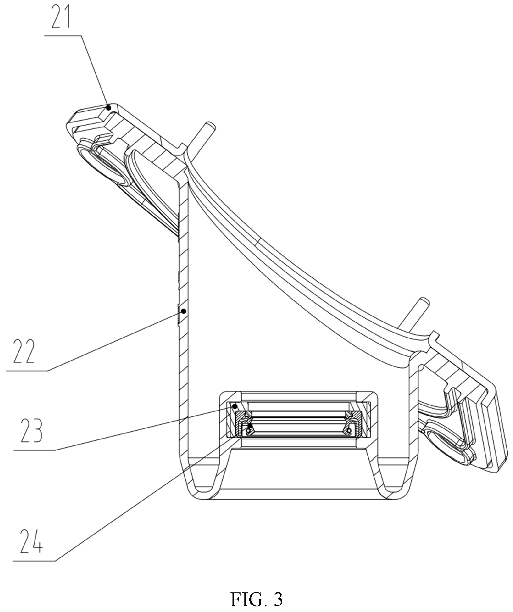

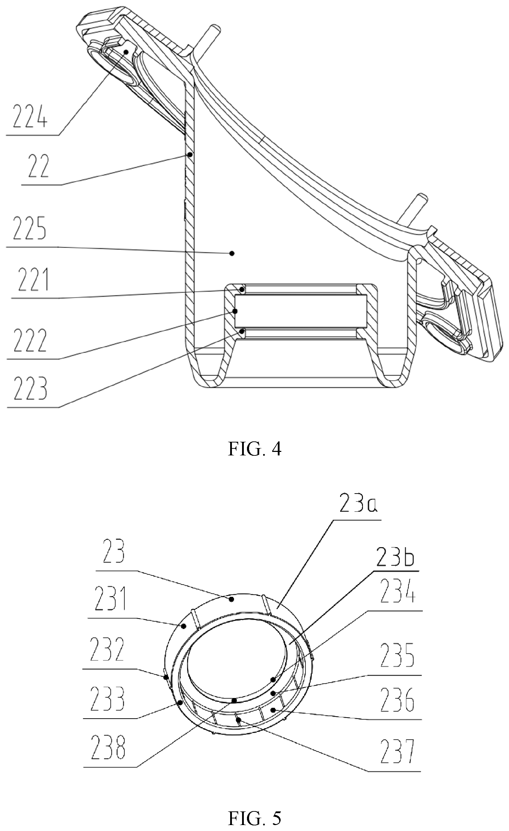

In an embodiment, referring to FIG. 3 and FIG. 4, an annular mounting groove 222 is provided in the hole wall of the mounting hole at another end of the cover body 22, and the bushing 23 and the sealing member 24 are disposed in the mounting groove 222. Specifically, the annular mounting groove 222 is provided in an inner wall of the inner cylinder body 22b, and the bushing 23 is press-fitted in the mounting groove 222. That is, the bushing 23 and the cover body 22 are mounted with an interference fit. In comparison with a solution in which the bushing and the collar are fastened to each other by adhesive and the sealing member and the collar are fastened to each other by a clamping slot, the assembly process is simple, sealing reliability is better, and production costs are reduced.

In an existing steering intermediate shaft sealing structure, two sealing structures are configured to seal between a sealing member and a steering intermediate shaft 3, that is, two sealing rings (K-sealing rings) are used. The K-sealing ring, a bushing and the sealing member are mounted in clearance fit, and water cannot be completely prevented from entering a cover body 22 from the clearance. In the dust cover assembly 2 in this embodiment of this application, the sealing member 24 and the bushing 23 are assembled through interference press-fit, which can completely prevent water from entering the cover body 22 through a fitting surface thereof, and has better sealing performance and meets the IPX7 waterproof rating requirement.

In an embodiment, the dust cover pressing plate 21 is formed by stamping a material of DC01 (cold-roll steel sheet), and the body sealing portion 224 of the cover body 22 is firmly mounted on the front cowl panel 1 through fastening connection of a bolt/nut, thereby sealing the dust cover assembly 2 and the front cowl panel 1. In order to improve sealing performance, a rib is disposed on a surface of the body sealing portion 224 that faces the front cowl panel 1.

In an embodiment, the cover body 22 is integrally formed by vulcanization of EPDM (Ethylene Propylene Diene Monomer).

The cavity 225 is configured to provide clearance for the steering intermediate shaft 3 and ensure that there is a sufficient safety distance between the cavity 225 and the steering intermediate shaft 3.

In an embodiment, the bushing is an integrally formed structure. For example, the bushing 23 is integrally formed by injection molding of a glass fiber reinforced nylon material.

In an embodiment, referring to FIG. 3 and FIG. 4, a first boss 221 and a second boss 223 are disposed on the hole wall of the mounting hole to form the mounting groove 222. That is, another end of the cover body 22 that is close to the front cowl panel 1 extends radially inward to the cover body 22, to form the first boss 221, and another end of the cover body 22 extends radially inward to the cover body 22, to form the second boss 223. Specifically, one end of the inner cylinder body 22b that is close to the front cowl panel 1 extends radially inward to the inner cylinder body 22b, to form the first boss 221. The second boss 223 is located between the first boss 221 and an end portion of the cover body 22 that is away from the front cowl panel 1 in an axial direction of the cover body 22. Specifically, the second boss 223 is located between the first boss 221 and an end of the inner cylinder body 22b that is away from the front cowl panel 1 in the axial direction of the cover body 22. The mounting groove 222 is formed between the first boss 221 and the second boss 223. In this way, a cross-section of the mounting groove 222 is C-shaped, and the first boss 221 and the second boss 223 are interference-fitted with the bushing 23, so that the bushing 23 can be well clamped.

In an embodiment, both the first boss 221 and the second boss 223 are annular.

In an embodiment, referring to FIG. 3 to FIG. 5, the bushing 23 is annular. An end surface 234 of the bushing 23 that is away from the second boss 223 in an axial direction abuts against a surface of the first boss 221 that faces the second boss 223. An end surface 233 of the bushing 23 that is close to the second boss 223 in the axial direction abuts against a surface of the second boss 223 that faces the first boss 221. In this way, the bushing 23 is interference-press-fitted in the mounting groove 222.

In an embodiment, referring to FIG. 3 to FIG. 5, a cross-section of the bushing 23 is L-shaped, the bushing 23 includes a bushing body 23a and a flange 23b connected to the bushing body 23a, and the flange 23b protrudes radially inward from the first boss 221 and the second boss 223. The flange 23b is connected to one end of the bushing body 23a that is close to the first boss 221, and extends radially inward to the bushing 23. The flange 23b protrudes from the mounting groove 222, and an end surface of the bushing body 23a that is close to the second boss 223 is located in the mounting groove 222. The flange 23b is configured to abut against a top end surface of the sealing member 24, and a bottom end surface of the sealing member 24 abuts against the second boss 223 to limit axial displacement of the sealing member 24.

An outer circumferential surface 231 of the bushing body 23a, the opposite axial end surface 233 of the bushing 23 and the axial end surface 234 of the bushing 23 are attachment surfaces for mounting with the cover body 22, all mounted by interference fit. The three surfaces are C-shaped interference fit, so that the bushing 23 is securely and reliably fastened in the cover body 22. A flange bottom surface 235 and an inner wall surface 236 of the bushing body 23a are configured to mount the inner sealing member 24, to ensure that the sealing member 24 is interference-fitted inside the flange bottom surface 235 and the inner wall surface 236 of the bushing body 23a, and to prevent solid/liquid contaminants such as water and dust from passing through a fitting surface thereof, thereby achieving sealing effect. A flange inner side surface 238 is radially spaced from the steering intermediate shaft 3 to ensure that the steering intermediate shaft 3 does not interfere with the bushing 23 during rotation.

In an embodiment, referring to FIG. 3 to FIG. 5, a plurality of outer ribs 232 are disposed on the outer circumferential surface 231 of the bushing body 23a, and the plurality of outer ribs 232 extend along the axial direction of the bushing 23. The outer rib 232 further provides an anti-rotation function for the interference fit mounting between the bushing 23 and the cover body 22, thereby avoiding relative rotation between the bushing 23 and the cover body 22, and increasing sealing reliability. A plurality of inner ribs 237 are disposed on the inner wall surface 236 of the bushing 23, and the plurality of inner ribs 237 extend along the axial direction of the bushing 23. The inner rib 237 further provides an anti-rotation function for the interference fit mounting between the bushing 23 and the sealing member 24, thereby avoiding relative rotation between the bushing 23 and the sealing member 24, and increasing sealing reliability.

The outer rib 232 may be recessed into the cover body 22 to seal the cover body 22 and the bushing 23. The inner rib 237 may be recessed into the sealing member 24 to seal the bushing 23 and the sealing member 24.

In an embodiment, referring to FIG. 5, the plurality of outer ribs 232 are arranged with equal spacing, the plurality of inner ribs 237 are arranged with equal spacing, and a spacing between adjacent outer ribs 232 is greater than a spacing between adjacent inner ribs 237.

In an embodiment, the sealing member 24 includes an annular main body portion 242 and a sealing lip 2422. The sealing lip 2422 is connected to an inner wall surface of the annular main body portion 242 and extends radially inward to the annular main body portion 242. The annular main body portion 242 is sealingly connected to the inner wall surface of the bushing 23.

In an embodiment, the sealing member 24 further includes a second support ring 243. A groove for mounting the second support ring 243 is formed in the annular main body portion 242 or sealing lip 2422, and the second support ring 243 is configured to provide support strength for the sealing lip 2422.

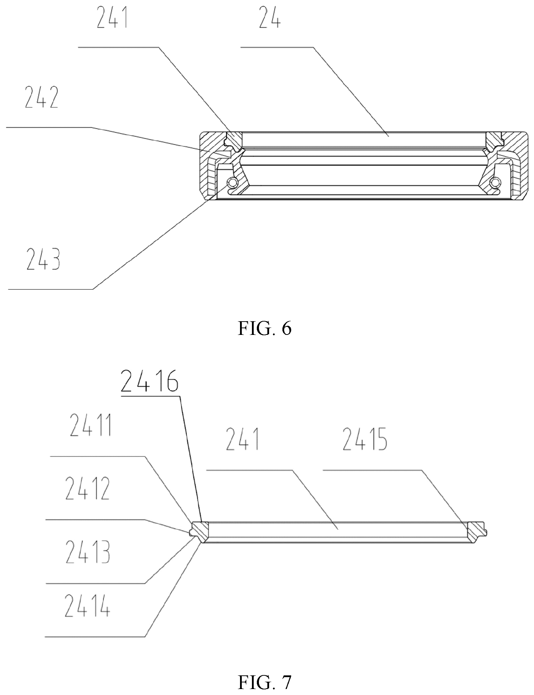

In an embodiment, referring to FIG. 6 to FIG. 8, the sealing member 24 further includes a first support ring 241, and an axial boss 2414 extending along an axial direction is disposed on the first support ring 241. One end surface in an axial direction of the sealing lip 2422 is provided with a first groove 24214 recessed along the axial direction of the sealing lip 2422, and the axial boss 2414 is interference-fitted in the first groove 24214, to limit radial movement of the first support ring 241 and the annular main body portion 242. The first support ring 241 is assembled in interference with an opening at one end of the annular main body portion 242 that is close to the second boss 223, and the annular main body portion 242 is assembled in an interference fit with the bushing 23. The sealing member 24 and the bushing 23 are mounted by interference fit, and the interference amount effectively prevents solid/liquid contaminants such as water and dust from entering the cover body 22 and the cockpit through a mounting fitting surface between the sealing member 24 and the bushing 23, thereby achieving a sealing effect. The first support ring 241 is integrally formed by injection molding of a glass fiber reinforced nylon material.

In an embodiment, the first support ring 241 is connected to an end of the sealing lip 2422 that is close to the second boss 223, to provide support strength for the sealing lip 2422.

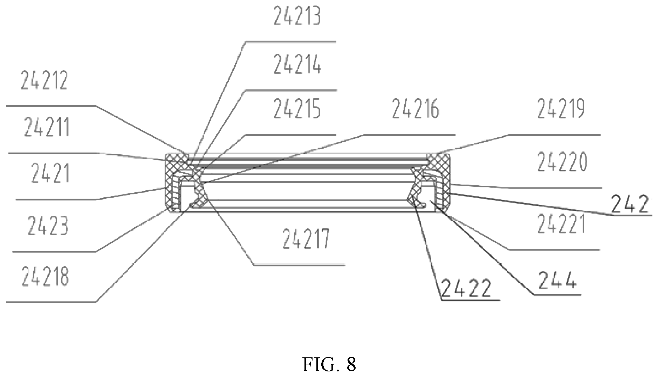

In an embodiment, referring to FIG. 6 and FIG. 8, the annular main body portion 242 includes a body portion 2421 and a holder 2423. The body portion 2421 wraps the holder 2423, and the holder 2423 is configured to enhance strength of the annular main body portion 242 and support the sealing lip 2422.

In an embodiment, referring to FIG. 6 and FIG. 8, the sealing lip 2422 is annular, and a first lip 24215 and a second lip 24217 are formed on a radially inner side of the sealing lip 2422. The first lip 24215 and the second lip 24217 are located at two opposite ends in the axial direction of the sealing lip 2422. The first lip 24215 is connected to one end of the inner wall surface of the annular main body portion 242 that is close to the first support ring 241, and extends to the inside of the annular main body portion 242. The second lip 24217 is connected to one end of the inner wall surface of the annular main body portion 242 that is away from the first support ring 241, and protrudes toward the inside of the annular main body portion 242. Double sealing between the sealing member 24 and the steering intermediate shaft 3 can be achieved through sealing contact between the two lips and the steering intermediate shaft 3.

In an embodiment, referring to FIG. 8, a shaft seal inter-lip groove 24216 is formed at a position between the first lip 24215 and the second lip 24217 in an inner wall surface of the sealing lip 2422 in the axial direction, and the shaft seal inter-lip groove 24216 is recessed radially outward of the sealing member 24. The shaft seal inter-lip groove 24216 is provided to avoid excessive contact between the sealing lip 2422 and the steering intermediate shaft 33 and reduce a rotational torque.

The first groove 24214 is located in a radially outer side of the first lip 24215 to support the first lip 24215.

In an embodiment, referring to FIG. 6 to FIG. 8, the sealing member 24 further includes the first support ring 241 provided with a radial boss 2412. An inner wall surface of an axial end opening of the annular main body portion 242 is provided with a second groove 24211 recessed along a radial direction of the annular main body portion 242. The radial boss 2412 is interference-fitted in the second groove 24211, to limit axial movement of the first support ring 241 and the annular main body portion 242.

Specifically, referring to FIG. 6 to FIG. 8, an inner wall surface of an opening at one end of the annular main body portion 242 that is close to the front cowl panel 1 has a support ring mounting side surface 24212 that extends along the axial direction of the annular main body portion 242 and a support ring mounting bottom surface 24213 extending along the radial direction of the annular main body portion 242. The support ring mounting bottom surface 24213 is connected to one end of the support ring mounting side surface 24212 that is away from the first boss 221. The support ring mounting side surface 24212 is provided with a second groove 24211 recessed radially outward of the annular main body portion 242. A surface of the first support ring 241 includes a support ring outer side surface 2411, a support ring top surface 2416, a support ring bottom surface 2413, and a support ring inner side surface 2415. The support ring outer side surface 2411 is connected between the support ring top surface 2416 and an outer edge of the support ring bottom surface 2413. The support ring inner side surface 2415 is connected between the support ring top surface 2416 and an inner edge of the support ring bottom surface 2413. The support ring outer side surface 2411 is provided with the radial boss 2412 that protrudes radially outward of the first support ring 241. The support ring outer side surface 2411 abuts against the support ring mounting side surface 24212, and the support ring bottom surface 2413 abuts against the support ring mounting bottom surface 24213.

In an embodiment, referring to FIG. 6 to FIG. 8, the support ring mounting bottom surface 24213 is provided with the first groove 24214 that is recessed along the axial direction of the annular main body portion 242 away from the front cowl panel 1. The support ring bottom surface 2413 is provided with the axial boss 2414 that protrudes along the axial direction of the first support ring 241 away from the front cowl panel 1. The axial boss 2414 is interference-press-fitted in the first groove 24214, to limit radial movement of the first support ring 241 and the annular main body portion 242.

The first support ring 241 is mounted with an interference fit between the annular main body portion 242 and the support ring outer side surface 2411, the radial boss 2412, the support ring bottom surface 2413, and the axial boss 2414. In addition, the radial boss 2412 performs axial limiting to avoid axial movement of the first support ring 241. In this way, the first support ring 241 is firmly fastened in the annular main body portion 242, and the support ring inner side surface 2415 has a sufficient distance in the radial direction from the steering intermediate shaft 3, to ensure that the steering intermediate shaft 3 does not interfere with the first support ring 241 during rotation.

In an embodiment, the first groove 24214 is located in the radially outer side of the first lip 24215 to support the first lip 24215.

In a preferred embodiment, the dust cover assembly 2 further includes a second support ring 243, and deformation avoidance space 244 is formed between the sealing lip 2422 and the annular main body portion 242. A support ring mounting groove 24218 recessed away from the deformation avoidance space 244 is formed in a surface of the sealing lip 2422 that is away from the second lip 24217. The second support ring 243 is sleeved on the sealing lip 2422 and accommodated in the support ring mounting groove 24218. The second support ring 243 is configured to press the second lip 24217 tightly against the steering intermediate shaft 3.

In an embodiment, the second support ring 243 is an annular spring. The annular spring is used as a standard part, and a material and a size are selected to ensure that the annular spring provides proper radial clamping force to a position in which the second lip 24217 is radially interference-fitted with the steering intermediate shaft 3. This not only meets the IPX7 rating requirement for sealing performance between the second lip 24217 and the steering intermediate shaft 3 but also meets a rotational torque specified between the second lip 24217 and the steering intermediate shaft 3. A groove structure of the support ring mounting groove 24218 ensures stable mounting of the annular spring and prevents the annular spring from falling off.

However, in another embodiment, a rubber band, a rubber ring or an elastic hoop may be used instead of the annular spring.

In an embodiment, the annular main body portion 242 is formed by vulcanization of DC01 L-shaped steel structure liner and NBR (Nitrile Butadiene Rubber, nitrile butadiene rubber) rubber. The holder 2423 is formed by stamping a material of DC01, and a structure is L-shaped, thereby improving strength of the holder 2423. Then, the holder 2423 is used as a liner, and the body portion 2421 made of NBR rubber is vulcanized on the outside of the holder 2423, to obtain the annular main body portion 242. The second groove 24211, the support ring mounting side surface 24212, the support ring mounting bottom surface 24213, and the first groove 24214 are mounting attachment surfaces for interference fitting with the first support ring 241. Because the NBR material has good elasticity, the four attachment surfaces: the second groove 24211, the support ring mounting side surface 24212, the support ring mounting bottom surface 24213 and the first groove 24214, have a specific amount of elastic compression in the case of an interference fit, to provide sufficient pressing force. In addition, the axial movement of the first support ring 241 is effectively limited through an interference fit between the second groove 24211 and the radial boss 2412, so that the mounting is more reliable. An interference fit between the first groove 24214 and the axial boss 2414 effectively supports radial interference-fit mounting between the first lip 24215 and the steering intermediate shaft 3, and provides specific inward radial pressing force, to ensure sealing performance of the first lip 24215. This prevents solid/liquid contaminants such as water and dust from entering the cover body 22 and the cockpit through a mating area between the first lip 24215 and the steering intermediate shaft 3, thereby achieving sealing effect. A position of the first lip 24215 is designed for use with grease, allowing smoother rotation of the steering intermediate shaft 3. Meanwhile, waterproof performance of the first lip 24215 is improved. The NBR material has excellent oil resistance and high wear resistance, so that sealing reliability and durability of the first lip 24215 are better guaranteed. The shaft seal inter-lip groove 24216 is provided to avoid excessive contact between the shaft seal inter-lip groove 24216 and the steering intermediate shaft 3 and reduce rotational torque. A shaft seal top end surface 24219, a shaft seal outer side surface 24220 and the bushing 23 are connected through a two-sided interference fit, and the NBR material has good elasticity, so that the interference fit between the shaft seal top end surface 24219, the shaft seal outer side surface 24220 and the bushing 23 has sufficient pressing force. This prevents solid/liquid contaminants such as water and dust from entering the cover body 22 and the cockpit through a fitting surface between the annular main body portion 242 and the bushing 23, thereby achieving sealing effect. A shaft seal bottom end surface 24221 is mounted with an interference fit with the second boss 223 of the cover body 22, thereby further stabilizing an axial tight fit between the annular main body portion 242 and the bushing 23, and increasing an axial limit of the annular main body portion 242 relative to the bushing 23. The second lip 24217 is mounted in a radial interference fit with the steering intermediate shaft 3. Combined with radial clamping force provided by the annular spring mounted on the support ring mounting groove 24218 and the grease applied to the second lip 24217, sealing performance between the second lip 24217 and the steering intermediate shaft 3 is ensured. This effectively prevents solid/liquid contaminants such as water and dust from entering the cover body 22 and the cockpit through a mating area between the second lip 24217 and the steering intermediate shaft 3, which meets the IPX7 waterproof rating requirement.

In addition, referring to FIG. 1, an embodiment of this application further provides a steering intermediate shaft sealing structure, including a front cowl panel 1, a steering intermediate shaft 3, and the dust cover assembly 2 in the foregoing embodiment. A through hole for the cover body 22 to pass through is provided in the front cowl panel 1, one end of the cover body 22 is sealingly connected to the front cowl panel 1, the steering intermediate shaft 3 passes through the cover body 22, and the sealing member 24 is sealingly connected to the steering intermediate shaft 3.

Specifically, a gap between the cover body 22 and an inner wall of the through hole is sealed by the body sealing portion 224.

Specifically, the steering intermediate shaft 3 passes through the inner cylinder body 22b, the outer cylinder body 22a, and a dust cover pressing plate 21.

In addition, an embodiment of this application further provides a vehicle, including the dust cover assembly 2 in the foregoing embodiment or the steering intermediate shaft sealing structure in the foregoing embodiment.

The foregoing descriptions are merely preferred embodiments of this application, but are not intended to limit this application. Any modification, equivalent replacement and improvement, or the like made without departing from the spirit and principle of this application shall fall within the protection scope of this application.

## Claims

1. A dust cover assembly for a vehicle, comprising:
a cover body (22), one end of the cover body (22) being adapted to be connected to a front cowl panel (1) of the vehicle, and another end of the cover body (22) being provided with a mounting hole;
a sealing member (24); and
a bushing (23), the bushing (23) being disposed between a hole wall of the mounting hole and the sealing member (24), and the sealing member (24) being adapted to be sealingly connected to a steering intermediate shaft (3) of the vehicle.

2. The dust cover assembly according to claim 1, wherein a plurality of outer ribs (232) are disposed on an outer circumferential surface of the bushing (23), and the plurality of outer ribs (232) extend along an axial direction of the bushing (23);
and/or,
a plurality of inner ribs (237) are disposed on an inner wall surface of the bushing (23), and the plurality of inner ribs (237) extend along the axial direction of the bushing (23).

3. The dust cover assembly according to claim 2, wherein the outer rib (232) and the inner rib (237) are disposed on the bushing (23), the plurality of outer ribs (232) are disposed with equal spacing, the plurality of inner ribs (237) are disposed with equal spacing, and a spacing between adjacent outer ribs (232) is greater than a spacing between adjacent inner ribs (237).

4. The dust cover assembly according to any one of claims 1 to 3, wherein an annular mounting groove (222) is formed in the hole wall of the mounting hole, and the bushing (23) and the sealing member (24) are disposed in the mounting groove (222).

5. The dust cover assembly according to claim 4, wherein a first boss (221) and a second boss (223) are disposed on the hole wall of the mounting hole to form the mounting groove (222).

6. The dust cover assembly according to claim 5, wherein an end surface of the bushing (23) that is away from the second boss (223) in the axial direction abuts against a surface of the first boss (221) that faces the second boss (223), and an end surface of the bushing (23) that is close to the second boss (223) in the axial direction abuts against a surface of the second boss (223) that faces the first boss (221).

7. The dust cover assembly according to claim 5 or 6, wherein the bushing (23) comprises a bushing body (23a) and a flange (23b) connected to the bushing body (23a), and the flange (23b) protrudes radially inward from the first boss (221) and the second boss (223).

8. The dust cover assembly according to any one of claims 1 to 7, wherein the sealing member (24) comprises an annular main body portion (242) and a sealing lip (2422), and the sealing lip (2422) is connected to an inner wall surface of the annular main body portion (242); and
the annular main body portion (242) is sealingly connected to the inner wall surface of the bushing (23), and the sealing lip (2422) is adapted to be in sealing contact with the steering intermediate shaft (3).

9. The dust cover assembly according to claim 8, wherein the sealing member (24) further comprises a second support ring (243), a groove for mounting the second support ring (243) is formed in the annular main body portion (242) or the sealing lip (2422), and the second support ring (243) is configured to provide support strength for the sealing lip (2422).

10. The dust cover assembly according to claim 8 or 9, wherein the sealing member (24) further comprises a first support ring (241); and
an axial boss (2414) extending along an axial direction is disposed on the first support ring (241), an end surface in an axial direction of the sealing lip (2422) is provided with a first groove (24214) recessed along the axial direction of the sealing lip (2422), and the axial boss (2414) is interference-fitted in the first groove (24214); and/or, a radial boss (2412) extending along a radial direction of the first support ring (241) is disposed on the first support ring (241), an inner wall surface of an axial end opening of the annular main body portion (242) is provided with a second groove (24211) recessed along a radial direction of the annular main body portion (242), and the radial boss (2412) is interference-fitted in the second groove (24211).

11. The dust cover assembly according to claim 8, wherein a first lip (24215) and a second lip (24217) are formed on a radially inner side of the sealing lip (2422), the first lip (24215) and the second lip (24217) are located at two opposite ends in an axial direction of the sealing lip (2422), and the first lip (24215) and the second lip (24217) are adapted to be in sealing contact with the steering intermediate shaft (3).

12. The dust cover assembly according to claim 11, wherein a shaft seal inter-lip groove (24216) is formed at a position between the first lip (24215) and the second lip (24217) in an inner wall surface of the sealing lip (2422) in the axial direction, and the shaft seal inter-lip groove (24216) is recessed radially outward of the sealing member (24).

13. The dust cover assembly according to claim 11, wherein the sealing member (24) further comprises a first support ring (241) and a second support ring (243); and
an end surface in the axial direction of the sealing lip (2422) is provided with a first groove (24214) recessed along the axial direction of the sealing lip (2422), the first groove (24214) is located in a radially outer side of the first lip (24215), an axial boss (2414) extending along an axial direction is disposed on the first support ring (241), and the axial boss (2414) is interference-fitted in the first groove (24214) to support the first lip (24215);
and/or,
a support ring mounting groove (24218) recessed radially is formed in a surface of the sealing lip (2422) that is away from the second lip (24217), the second support ring (243) is sleeved on the sealing lip (2422) and accommodated in the support ring mounting groove (24218), and the second support ring (243) for pressing the second lip (24217) tightly against the steering intermediate shaft (3).

14. The dust cover assembly according to any one of claims 1 to 13, wherein the bushing (23) is an integrally formed structure.

15. A steering intermediate shaft sealing structure, comprising a front cowl panel (1), a steering intermediate shaft (3) and the dust cover assembly (2) according to any one of claims 1 to 14, wherein a through hole for the steering intermediate shaft (3) to pass through is provided in the front cowl panel (1), one end of the cover body (22) is sealingly connected to the front cowl panel (1), the steering intermediate shaft (3) passes through the cover body (22), and the sealing member (24) is sealingly connected to the steering intermediate shaft (3).

16. The steering intermediate shaft sealing structure according to claim 15, further comprising a dust cover pressing plate (21), wherein the cover body (22) comprises an outer cylinder body (22a) and an inner cylinder body (22b), a cavity (225) is formed inside the outer cylinder body (22a), one end of the outer cylinder body (22a) is sealingly connected to the front cowl panel (1), the inner cylinder body (22b) is connected to another end of the outer cylinder body (22a) and extends from an end surface of another end of the outer cylinder body (22a) toward the front cowl panel (1), the dust cover pressing plate (21) is configured to press the end of the outer cylinder body (22a) onto the front cowl panel (1), the bushing (23) is press-fitted in the inner cylinder body (22b), and the sealing member (24) is press-fitted in the bushing (23).

17. The steering intermediate shaft sealing structure according to claim 16, wherein the cover body (22) further comprises a body sealing portion (224), the body sealing portion (224) is connected to the end of the outer cylinder body (22a), and the dust cover pressing plate (21) is configured to press the body sealing portion (224) onto the front cowl panel (1).

18. A vehicle, comprising the dust cover assembly (2) according to any one of claims 1 to 14 or the steering intermediate shaft sealing structure according to any one of claims 15 to 17.
